# EUROPÄISCHE PATENTSCHRIFT

(11) **EP 1 712 818 B1**
(45) Veröffentlichungstag und Bekanntmachung des Hinweises auf die Patenterteilung: **30.12.2009**
(21) Anmeldenummer: 06006604.0
(22) Anmeldetag: 29.03.2006
(51) Int. Cl.: F16K 7/12

(54) **Membranventil**
Diaphragm valve
Vanne à diaphragme

(30) Priorität: 11.04.2005 DE 102005016600
(43) Veröffentlichungstag der Anmeldung: 18.10.2006
(73) Patentinhaber: GEMÜ Gebrüder Müller Apparatebau GmbH & Co. KG, 74653 Ingelfingen (DE)
(72) Erfinder: Müller, Fritz, 71653 Ingelfingen (DE)
(74) Vertreter: Dreiss

(56) Entgegenhaltungen:
- FR-A- 1 088 362
- FR-A- 1 202 731
- FR-A- 1 358 967
- GB-A- 808 074
- GB-A- 866 548

## Beschreibung

Die Erfindung betrifft ein Membranventil mit den Merkmalen des Oberbegriffs des Anspruchs 1.

Membranventile der unterschiedlichsten Bauformen für Durchgangsleitungen sind an sich bekannt. Üblicherweise umfaßt ein Membranventil einen Ventilkörper, an welchem ein Ventilsitz, beispielsweise in Form eines Steges, vorgesehen ist. Eine Membrane wird mittels eines Druckstückes, welches beispielsweise durch eine Stellspindel beaufschlagt ist, in der Schließstellung gegen den Ventilsitz am Ventilkörper gedrückt, um in dieser Schließstellung des Membranventils den Fluiddurchgang durch die Leitung im Bereich des Ventilkörpers abzusperren. In der Offenstellung des Membranventils ist die Membrane von dem Ventilsitz beabstandet, und ein Fluid kann durch den vom Ventilkörper gebildeten Durchgang und die hiermit verbundene Leitung weitgehend ungehindert strömen.

Beim Anwendungsbereich von empfindlichen Medien, wie auf dem Gebiet der Lebensmittel- und Pharmaindustrie, wird gefordert, dass die mediendurchströmten Leitungen mittels Reinigungskörpern, welche auch als "Molche" bezeichnet werden, aus Hygienegründen zu reinigen sind. Damit diese Reinigungskörper auch den Ventilbereich, insbesondere den Membranventilbereich, ungehindert passieren können, muß der Fluiddurchtrittsquerschnitt auch im Bereich des Membranventils weitgehend frei von vorstehenden Teilen, wie Ventilsitzen, oder dergleichen sein. Aus der GB 808,074 ist ein Membranventil bekannt, bei dem bei geöffneten Ventil der Leitungsquerschnitt frei durchgängig ist.

Der Erfindung liegt die Aufgabe zugrunde, ein Membranventil bereitzustellen, welches im Bedarfsfall unbehindert eine Reinigung auch im Bereich des Membranventils mittels bewegbaren Reinigungskörpern (Molchen) gestattet, was insbesondere auf dem Gebiet der Lebensmittel- und Pharmaindustrie oder ähnlichen Anwendungsgebieten gefordert wird.

Diese Aufgabe wird erfindungsgemäß mit einem Membranventil gelöst, das die Merkmale des Anspruchs 1 aufweist.

Bei dem erfindungsgemäßen Membranventil wird somit in der Offenstellung der Leitungsdurchgangsquerschnitt von dem Ventilkörper und teilweise von der Membrane in der Offenstellung gebildet und begrenzt, ohne dass eine Durchtrittsquerschnittsverengung in nennenswerter Weise auftritt, so dass im Bedarfsfall Reinigungskörper, wie Molche, unbehindert auch den Membranventilbereich passieren können. Somit ist ein solches Membranventil nach der Erfindung insbesondere auch auf dem Gebiet der Lebensmittel- und Pharmaindustrie und dergleichen geeignet, da zur Einhaltung der Hygienebestimmungen im Bedarfsfall eine vollständige Reinigung der Leitung einschließlich des Membranventilbereichs mittels des Durchgangs von bewegbaren Reinigungskörpern ohne Schwierigkeiten erreicht werden kann. Im Bereich des Membranventils sind im wesentlichen keine Durchtrittsquerschnittsverengungen vorhanden, und insbesondere sind weder vorstehende Ventilstege, Ventilteller, Klappenscheiben, Schieber, Spindeln oder dergleichen vorhanden, welche den freien Durchgang von derartigen Reinigungskörpern behindern würden. In der Schließstellung des Membranventils wird die Membrane mittels des Druckstücks derart verformt, dass der am Ventilkörper ausgebildete Leitungsdurchgang als Ventilsitz dient, gegen welchen die Membrane mittels des Druckstücks angedrückt wird, um den Fluiddurchgang in der Schließstellung des Membranventils abzusperren. Auch hat ein solches Membranventil nahezu keine Toträume, da das Druckstück die Membrane von außen beaufschlagt, d.h. von der mediumsabgewandten Seite, während die andere Seite der Membrane dem Medium zugewandt liegt, und in der Schließstellung mit dem Ventilkörper zur Bildung eines dichten Abschlusses zusammenarbeitet.

Erfindungsgemäß weist der Ventilkörper eine Membranauflage auf, welche in Längsrichtung des Leitungsdurchganges sattelähnlich, beispielsweise in Form eines geschwungenen S", ausgebildet ist. Ein den Leitungsdurchgangsquer schnitt vervollständigendes Gehäuseteil umschließt die auf der Membranauflage aufliegende Membrane an ihrer mediumsabgewandten Seite. Die Membrane ist somit zwischen der Membranauflage des Ventilkörpers und dem umschließenden Gehäuseteil eingespannt, und die Membrane hat, ähnlich wie die Membranauflage, ebenfalls eine sattelähnliche Ausgestaltungsform, so dass in Offenstellung des Membranventils ein Teil des Leitungsdurchganges von der Membrane gebildet wird, welche formstabil zwischen der Membranauflage des Ventilkörpers und des umschließenden Gehäuseteiles gehalten ist, welches hinsichtlich seiner Gestaltungsform dem Leitungsdurchgangsquerschnitt angepasst ist. Wenn man das Membranventil nach der Erfindung in seiner Offenstellung im Querschnitt schneidet, so erhält man im Bereich des Membranventils eine weitgehend unmittelbare Fortsetzung des Leitungsdurchtrittsquerschnitts für den Mediumdurchgang der an den Ventilkörper angeschlossenen Leitung, wobei der Leitungsdurchgangsdurchschnitt im Bereich des Membranventils in seiner offenen Stellung von der Membrane und dem Ventilkörper begrenzt und definiert wird. Somit ist ein unbegrenzter Durchgang von Reinigungskörpers im Bedarfsfall möglich.

Nach der Erfindung wird hierzu die Lösung vorgeschlagen, als einen Ventilsitzbereich für die Membrane in der Schließstellung den Leitungsdurchtrittsquerschnitt des Ventilkörpers selbst zu nehmen, so dass keine vorspringenden Stege als Ventilsitz für die Membrane und deren Anlage vorhanden sind. In der Offenstellung des Membranventils wird ein Teil des Leitungsdurchgangsquerschnitts von der einen Seite der Membrane selbst begrenzt, welcher an die Form des Durchgangsquerschnitts in diesem Bereich zur Vervollständigung angepasst ist, und in dieser Offenstellung unterstützend und stabil in dieser gewölbten Gestalt durch das entsprechend ausgestaltete Gehäuseteil des Membranventils gehalten wird. Ein solches Ventil ist insbesondere für die Lebensmittel- und Pharmaindustrie bestimmt, da bei diesen Anwendungsgebieten hohe Anforderungen an die Hygiene und an eventuelle Kontaminierungen zu stellen sind, welche sich dadurch einhalten lassen, dass die Leitung auch im Bereich des Membranventils mittels Reinigungskörper reinigbar ist, welche durch die Leitungen und das Membranventil durchgedrückt werden und die Leitungswände umfänglich abreinigen.

Da beim erfindungsgemäßen Membranventil vorzugsweise die Membrane zwischen der Membranauflage des Ventilkörpers und dem Gehäuseteil eingespannt ist, behält sie auch in der Offenstellung eine vorbestimmte Form und Gestalt zur Vervollständigung des Leitungsdurchgangsquerschnitts bei.

Um insbesondere einen ungehinderten Durchgang von Reinigungskörpern, wie Molchen, zuzulassen, ist die Membrane an die Auflage und das Gehäuseteil angepaßt, so dass ein vollständig freier Leitungsdurchgangsquerschnitt in Offenstellung des Membranventils vorhanden ist.

Vorzugsweise ist das Druckstück am Gehäuseteil verdrehsicher bei seiner Bewegung von der Offenstellung in die Schließstellung des Membranventils und umgekehrt geführt. Hierdurch wird erreicht, dass immer der vorbestimmte Teil des Druckstücks mit der Membrane zusammenarbeitet, und diese dann bei der Überführung in die Schließstellung derart verformt, dass sie gegen die Innenwand des Ventilkörpers dicht schließend angedrückt wird. Auch gestattet die Führung für das Druckstück am Gehäuseteil eine möglichst leicht gängige Bewegung des Druckstücks zur Ausführung der entsprechenden Bewegungen in die Schließstellung und/oder Offenstellung des Membranventils.

Vorzugsweise ist die verdrehsichere Führung des Druckstücks am Gehäuseteil in Form einer Anordnung ausgelegt, welche mindestens zwei senkrecht zueinander verlaufende Schlitze umfasst. Hierdurch wird das Druckstück in zwei senkrecht zueinander stehenden Ebenen zuverlässig bei der Bewegung geführt, so dass ein repetiergenauer Bewegungsablauf bei der Ventilbetätigung und der Bewegung des Druckstücks zur Verbesserung der Funktionsfähigkeit gewährleistet ist. ,

Vorzugsweise verläuft wenigstens einer der Schlitze etwa in Richtung der Längsachse des Ventilkörpers, während der andere Schlitz senkrecht hierzu steht. Somit wird das Druckstück sowohl in Längsachsrichtung als auch senkrecht hierzu wirksam bei der Bewegung geführt.

Vorzugsweise ist das Druckstück derart ausgelegt, dass sein mit der Membrane zusammenarbeitender Bereich in der Schließstellung des Membranventils die Membrane gegen die Innenwandung des Leitungsdurchganges im Bereich des Ventilkörpers anliegend angedrückt ist. Durch diese Auslegung des Druckstücks wird erreicht, dass die Membrane in der Schließstellung in Umfangsrichtung eine flächige Anlage gegen den Leitungsdurchgang des Ventilkörpers hat, um einen zuverlässig dichten Abschluß und eine vollständige Absperrung des Mediums durch den Leitungsdurchgang in der Schließstellung des Membranventils auch nach längerer Gebrauchsdauer zuverlässig sicher zu stellen.

Vorzugsweise ist der mit der Membrane zusammenarbeitende Bereich des Druckstücks an die Form des Leitungsdurchgangsquerschnitts angepasst. Somit erhält man im geschlossenen Zustand des Membranventils eine umfängliche Formanpassung von Membrane und Innenwand des Ventilkörpers, so dass eine zuverlässige Abdichtung gewährleistet ist. Insbesondere ist der mit der Membrane zusammenarbeitende Bereich des Druckstücks keilförmig ausgebildet, und dieser Bereich beaufschlagt die Membrane flächig. Somit werden die Verformungskräfte von dem Druckstück auf die Membrane flächig aufgebracht, um Spannungs- und Kraftkonzentrierungen zu vermeiden, welche die Standzeit eines solchen Membranventils herabsetzen könnten.

Vorzugsweise ist der mit der Membrane zur Definition der Schließstellung zusammenarbeitende Bereich des Druckstücks in Form eines vorspringenden Kreisabschnitts komplementär zu dem Leitungsdurchgangsquerschnitt ausgebildet. Eine solche Auslegung ist insbesondere dann zweckmäßig, wenn der Leitungsdurchgangsquerschnitt eine etwa kreisförmige Gestalt hat, und somit der vorspringende Kreisabschnitt des Druckstücks die Membrane unter Anpassung an diesen Leitungsdurchgangsquerschnitt derart verformt, dass sie in der Schließstellung des Membranventils zuverlässig den Leitungsdurchgangsquerschnitt absperrt.

Vorzugsweise sind der Keilabschnitt und der vorspringende Kreisabschnitt des Druckstücks, welche in einer etwa senkrecht zueinander stehenden Ebene angeordnet sind, mittels der Schlitzanordnung im Gehäuseteil geführt. Somit kann sich das Druckstück bei der Bewegung zum Öffnen und Schließen des Membranventils nicht verklemmen oder verkanten, und es ist eine gleichmäßige Kraftübertragung über den Keilabschnitt und den vorspringenden Kreisabschnitt auf der Membrane zu deren Verformung möglich. Daher lassen sich Kraftbeaufschlagungsspitzen und -konzentrierungen zur Verbesserung und Erhöhung der Standzeit des Membranventils wirksam vermeiden.

Gemäß einer bevorzugten Ausführungsform des Membranventils nach der Erfindung ist das Druckstück einschließlich des vorspringenden Kreisabschnitts in Offenstellung des Membranventils bis in den Bereich der Schlitzanordnung einziehbar. Hierdurch wird erreicht, dass die Membrane zuverlässig in ihre vollständige Offenstellung zurückkehrt, in welcher sie gegen das den Leitungsdurchgangsquerschnitt vervollständige Gehäuseteil anliegt. Somit ist in der Offenstellung im wesentlichen keine Durchtrittsquerschnittsveränderung vorhanden.

Bei dem erfindungsgemäßen Membranventil kann das Druckstück mittels einer Stelleinrichtung, wie einer Stellspindel oder dergleichen, manuell, elektrisch, hydraulisch und/oder pneumatisch betätigt werden.

Bei der Auslegung des erfindungsgemäßen Membranventils ist es wesentlich, dass ein behinderungsfreier Durchgang für Reinigungskörper, wie Molche, auch im Bereich des Membranventils möglich ist, obgleich das Membranventil als solches einen möglichst wenige Bauteile umfassenden Aufbau haben und kostengünstig darstellbar sein soll. Auch sollen nur wenige, hinsichtlich der Dichtheit kritische Bereiche bei einem solchen Membranventil vorhanden sein, und es sollte weitgehend totraumfrei, oder zumindest totraumarm sein.

Die Erfindung wird nachstehend an Hand einer bevorzugten Ausführungsform unter Bezugnahme auf die beigefügte Zeichnung näher erläutert. In der Zeichnung zeigen:
- Fig. 1: einen Querschnitt in auseinandergezogener Darstellung durch ein Ausführungsbeispiel des erfindungsgemäßen Membranventils in Offenstellung;
- Fig. 2: eine Explosionsdarstellung des Membranventils gemäß Figur 2, und
- Fig. 3 und 4: zeigen das Membranventil in den entsprechenden Ansichten nach den Figuren 1 und 2 in der Schließstellung.

Selbstverständlich ist die Erfindung nicht auf die nachstehend erläuterten Einzelheiten der bevorzugten Ausfuhrungsformen der Erfindung beschränkt, sondem es handelt sich hierbei um ein nicht beschränkendes, lediglich zu Illustrationszwecken dienendes Beispiel. Weitere Abänderungen und Modifikationen kann der Fachmann im Bedarfsfall treffen.

Bei der dargestellten bevorzugten Ausführungsform ist die Betätigungseinrichtung bzw. die Stelleinrichtung nicht näher dargestellt, welche manuell, elektrisch, hydraulisch und/oder pneumatisch betrieben werden kann.

In der Zeichnung ist ein Membranventil insgesamt mit dem Bezugszeichen 1 versehen. Das Membranventil 1 weist einen Ventilkörper 2 auf, welcher vorzugsweise aus metallischem Material hergestellt ist. Der Ventilkörper weist eine Längsachse auf, welche mit 3 bezeichnet ist, und an den jeweiligen Enden des Ventilkörpers 2 sind Leitungsabschnittsstutzen 4, 5 vorgesehen, an welche dann eine entsprechende, nicht näher dargestellte Durchgangsleitung angeschlossen wird, welche von einem Fluid, insbesondere einer Flüssigkeit, durchströmt ist. Insbesondere handelt es sich hierbei um Fluide bzw. Flüssigkeiten, welche auf dem Gebiet der Lebensmittel- und Pharmaindustrie zur Zubereitung von Lebensmitteln oder Pharmazeutika eingesetzt werden.

Der Ventilkörper 2 hat eine Membranauflage 6, welche in Längsachsrichtung 3 sattelähnlich ausgebildet ist. Wie aus den Figuren der Zeichnung zu ersehen ist, begrenzt diese Membranauflage 6 eine zu dem Innenraum des Ventilkörpers 2 führende Öffnung, welche ebenfalls dreidimensional geschwungen ausgebildet ist, und die Zylinderwand des Ventilkörpers 2 durchsetzt und durchdringt. Auf dieser Membranauflage 6 liegt eine komplementär zur Membranauflage 6 ausgebildete Membrane 7 auf, welche somit ebenfalls sattelähnlich ausgebildet ist, aber im Bereich des Membranventils an den Umriss der Leitungsabschnittsstutzen 4 und 5 in Form eines vervollständigenden Übergangs ausgebildet ist. Der Mittelbereich der Membrane 7 ist parallel zur Längsachse 3 des Ventilkörpers 2 gewölbt ausgebildet, so daß in der Offenstellung des Membranventils 1 die dem Medium zugewandte Innenseite der Membrane 7 einen Teil des Leitungsdurchgangsquerschnitts bildet und begrenzt. Die Membrane 7 ist von einem vorzugsweise aus einem metallischen Material hergestellten Gehäuseteil 8 umschlossen, welches den Leitungsdurchgangsquerschnitt im Bereich des Membranventils 1 vervollständigt. Dieses Gehäuseteil 8 ist passend zu der Membrane 7 und der Membranauflage 6 ausgebildet, so daß im verbundenen Zustand von Ventilkörper 2, Membrane 7 und Gehäuseteil 8, wobei die Verbindung beispielsweise mit Hilfe von Schraubenbolzen 9 hergestellt wird, im Bereich des Membranventils 1 vollumfänglich und allseitig ein Leitungsdurchgangsquerschnitt umschlossen wird, dessen freier Durchtrittsquerschnitt im wesentlichen gleich groß und gleichförmig wie jener der Leitungsabschnittsstutzen 4, 5 des Ventilkörpers 2 ausgebildet ist.

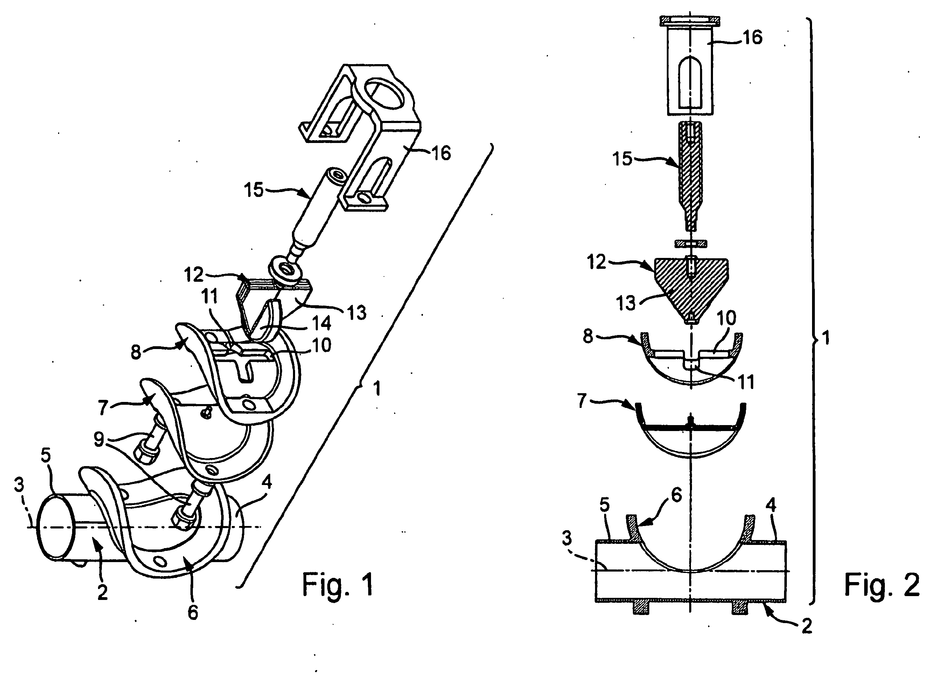

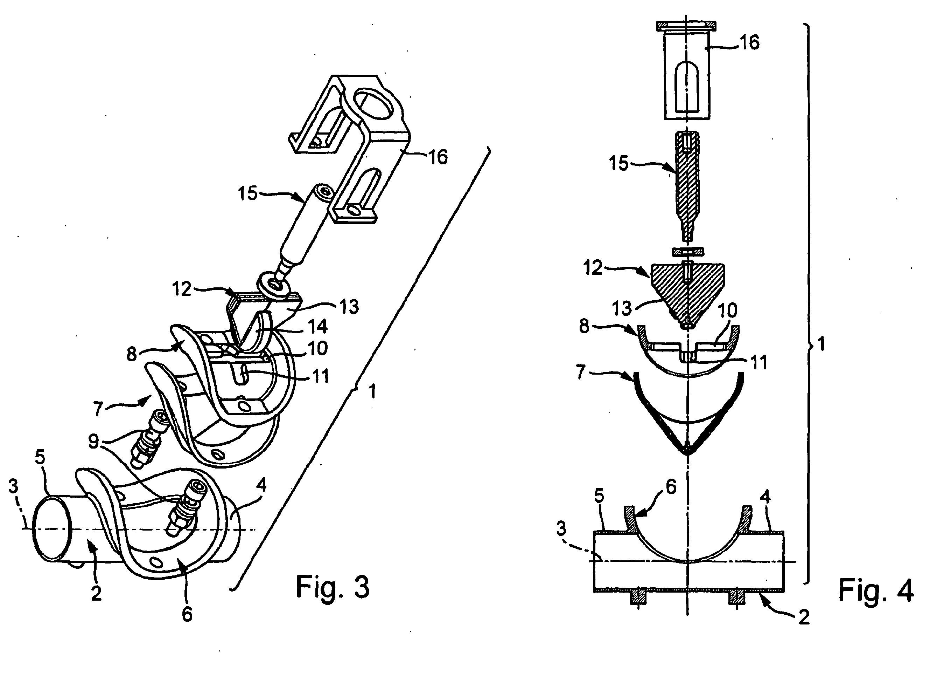

Das Gehäuseteil 8 hat eine Anordnung von sich senkrecht schneidenden Schlitzen 10, 11. Diese Schlitze 10, 11 dienen zur verdrehsicheren Führung eines Druckstücks 12, welches einen keilförmigen Abschnitt 13 und einen kreisförmig vorspringenden Abschnitt 14 umfaßt. Der Schlitz 10 der Schlitzanordnung weist im wesentlichen in Richtung der Längsachse 3 des Ventilkörpers 2. Dieser Schlitz 10 dient zur Führung des keilförmigen Abschnitts 13 des Druckstücks 12, und der hierzu in etwa senkrecht stehende Schlitz 11 dient zur Führung des vorspringenden, kreisförmigen Abschnitts 14 des Druckstücks 12. Somit ist das Druckstück 12 mit Hilfe der Schlitze 10 und 11 zuverlässig verdrehsicher bei seiner Bewegung geführt, bei der das Membranventil 1 von seiner Offenstellung (siehe Figuren 1 und 2) zu seiner Schließstellung (siehe Figuren 3 und 4) bewegt wird. Mit dem Druckstück 12 ist eine Stelleinrichtung 15 verbunden, welche beispielsweise von einer Anzeigespindel bei der dargestellten bevorzugten Ausführungsform gebildet wird. An dem Gehäuseteil 8 ist vorzugsweise mit Hilfe der Schraubbolzen 9 ein Zwischenstück 16 befestigt, welches die Stelleinrichtung 15 durchdringt, und das beispielsweise ein Widerlager für die entsprechende Betätigungseinrichtung der Stelleinrichtung 15 dient. Mit der Stelleinrichtung 15 kann beispielsweise ein Handrad für eine manuelle Betätigung, oder auch ein elektrischer, hydraulischer und/oder pneumatischer Antrieb in Wirkverbindung sein. Die Schraubenbolzen 9 dienen somit bei dem Membranventil 1 nicht nur zur Einspannung und Festlegung der Membrane 7 zwischen der Membranauflage 6 des Ventilkörpers 2 und dem Gehäuseteil 8, sondem auch zur Befestigung des Zwischenstücks 16, welches die Stelleinrichtung 15 durchdringt.

Wie aus der Explosionsdarstellung nach Figur 2 zu ersehen ist, begrenzt die Membrane 7 in der Offenstellung des Membranventils 1 einen Teil des Leitungsdurchgangsquerschnitts im Bereich des Ventilkörpers 2, so daß die Membrane 7 in ihrer Offenstellung zusammen mit dem Ventilkörper 2 vollumfänglich einen Leitungsdurchgangsquerschnitt mit vorbestimmten Abmessungen begrenzt, die in etwa den Abmessungen der Leitungsabschnittsstutzen 4, 5 entsprechen. Das Druckstück 12 des Membranventils 1 ist hierbei teilweise in die Anordnung der Schlitze 10 und 11 eingerückt, so daß weder der keilförmige Abschnitt 13 noch der kreisförmige Abschnitt 14 des Druckstücks 12 die Membrane mit einer nennenswerten Druckkraft beaufschlagen. Vielmehr legt sich die Membrane formschlüssig zwischen der Membranauflage 6 und dem Gehäuseteil 8 zur Vervollständigung des Leitungsdurchtrittsquerschnitts an. In der Offenstellung des Membranventils 1 nach Figur 2 ist somit im Bereich des Membranventils 1 im wesentlichen weder ein Totraum noch eine Querschnittsverengung vorhanden. Mit dem durchgehenden bzw. durchströmenden Medium kommt nur ein Teil der Membrane 7 in unmittelbare Berührung.

Wenn nun eine von einem Medium durchströmte Leitung, welche an die Leitungsabschnittsstutzen 4, 5 des Ventilkörpers 2 angeschlossen ist, mittels Reinigungskörper, welche auch als "Molche" bezeichnet werden, beispielsweise aus Hygienegründen oder Kontaminierungsgründen, gereinigt werden soll, so können diese Reinigungskörper im wesentlichen ungehindert das Membranventil 1 in seiner Offenstellung passieren, da die Membrane 7 im Zusammenwirken mit der Membranauflage 6 und dem Gehäuseteil 8 einen vollständig in Längsachsrichtung 3 ungehindert durchgehenden Bereich bildet. Somit können die Reinigungskörper ungehindert durch das Membranventil 1 in seiner Offenstellung hindurchbewegt werden, und der Ventilkörper 2 und der mit dem Medium in Berührung kommende Bereich der Membrane 7 kann ebenfalls zuverlässig ohne Bildung von nennenswerten Toträumen abgereinigt werden. Somit genügt ein solches Membranventil 1 hohen Reinheitsanforderungen, welche insbesondere bei Anwendungen auf dem Gebiet der Lebensmittel- und Pharmaindustrie wesentlich sind.

In den Figuren 3 und 4 sind gleiche oder ähnliche Teile mit denselben Bezugszeichen versehen. An Hand der Figuren 3 und 4 wird das Membranventil 1 in seiner Schließstellung verdeutlicht, in welcher die Leitung im Bereich des Ventilkörpers 2 für den Fluiddurchgang abgesperrt ist. Von der in den Figuren 1 und 2 gezeigten Offenstellung wird das Membranventil 1 in seine in den Figuren 3 und 4 gezeigten Schließstellung durch Betätigung der Stelleinrichtung 15 überführt. Mittels der Stelleinrichtung 15 wird das Druckstück 12 unter verdrehsicherer Führung mittels den Schlitzen 10 und 11 im Gehäuseteil 8 in Richtung auf die Membrane 7 bewegt. Hierdurch wird die Membrane 7 nach Maßgabe des keilförmigen Abschnitts 13 und des kreisförmigen Abschnitts 14 derart verformt, daß in der Schließstellung die Membrane 7 beispielsweise mittels des kreisförmigen Abschnitts 14 flächig über den Umfangsabschnitt des Ventilkörpers 2, welcher als Ventilsitz dient, anliegt, und in dieser Stellung wird die Membrane 7 gegen den Ventilkörper 2 gedrückt, so daß der Fluiddurchgang durch den Ventilkörper beim Zusammenwirken von der mittels des Druckstücks 12 verformten Membrane 7 und den zugeordneten Bereichen des Ventilkörpers 2 vollständig dicht schließend abgesperrt ist.

Wie aus der Schnittdarstellung aus Figur 4 zu ersehen ist, in welcher die Membrane 7 in ihrer Schließstellung und vollständig verformten Stellung gezeigt ist, ist ein mittlerer Bereich der Membrane 7 mit dem kreisförmig vorspringenden Abschnitt 14 des Druckstücks 12 vorzugsweise fest verbunden, so daß eine zuverlässige Anlage- und Andrückberührung in diesem Bereich über den Umfang verteilt gegen den Ventilkörper 2 sichergestellt ist. Dank des keilförmigen Abschnitts 13 und des kreisförmig vorspringenden Abschnitts 14 des Druckstücks 12 wird die Verformungskraft auf die Membrane 7 über relativ große Flächen verteilt aufgebracht, um Kraftkonzentrierungen und -spitzen bei der Beaufschlagung der Membrane 7 zur Verbesserung und Erhöhung von deren Standfestigkeit zu vermeiden. In der Schließstellung des Membranventils 1 ist somit die Membrane 7 im Zusammenwirken mit dem keilförmigen Abschnitt 13 und dem kreisförmigen vorspringenden Abschnitt 14 im Querschnitt gesehen V-förmig verformt, und sperrt den Fluiddurchgang ab. Sobald die Stelleinrichtung 15 in Öffnungsrichtung des Membranventils 1 betätigt und bewegt wird, kehrt die Membrane 7 wieder in ihre entsprechende Ausgangsstellung zurück, die beispielsweise aus Figur 2 in der Offenstellung des Membranventils 1 zu ersehen ist. In dieser Offenstellung kann das Fluid dann wieder ungehindert durchströmen, und gegebenenfalls kann auch ein Reinigungskörper durch die durchströmen Bereiche des Membranventils 1 weitgehend ungehindert hindurch bewegt werden.

Da das Druckstück 12 sowohl mit dem keilförmigen Abschnitt 13 als auch mit dem kreisförmigen Abschnitt 14 mittels den Schlitzen 10, 11 im Gehäuseteil 8 geführt ist, kann das Druckstück 12 auch in den Bereich der Schlitze 10, 11 eingezogen werden, so daß die Membrane 7 in der Offenstellung des Membranventils 1 den freien Durchtrittsquerschnitt vollumfänglich frei gibt.

Obgleich voranstehend eine bevorzugte Ausführungsform eines Membranventils 1 erläutert worden ist, sind insbesondere Abänderungen hinsichtlich des Druckstücks 12 sowie gegebenenfalls der Schlitzanordnung zur-verdrehsicheren Führung des Druckstücks 12 im Gehäuseteil möglich, solange sichergestellt wird, daß das Druckstück 12 immer in definierter Lage die Membrane 7 beaufschlagt und diese bis zur Schließstellung verformt. Auch die Membrane 7 und die Membranauflage 6 können unter entsprechender wechselseitiger Anpassung gegebenenfalls in Verbindung mit dem Gehäuseteil 8 abgeändert werden, wobei die Abänderungen gegebenenfalls auch von dem Leitungsdurchmesser oder dem Durchmesser der Leitungsabschnittsstutzen 4, 5 des Ventilkörpers 2 abhängig sein können. Auch können gegebenenfalls an Stelle der Schraubenbolzen 9 andere geeignete Verbindungs- und Befestigungsmittel eingesetzt werden. In Abhängigkeit von der Antriebsart der Stelleinrichtung 15 kann gegebenenfalls auch das Zwischenstück 16 entfallen.

## Patentansprüche

1. Membranventil (1) für eine Leitung, welche im Bedarfsfall mittels durch den Leitungsdurchgangsquerschnitt bewegbarer Reinigungskörper reinigbar ist, insbesondere auf dem Gebiet der Lebensmittel- und Pharmaindustrie oder dergleichen, mit einem Ventilkörper (2) und einer Membrane (7), welche mittels eines Druckstücks (12) in Schließstellung den Fluiddurchgang durch die Leitung im Bereich des Ventilkörpers (2) absperrt und in Offenstellung den Fluiddurchgang freigibt, wobei die Membrane (7), das Druckstück (12) und der Ventilkörper (2) derart ausgelegt sind, dass in Offenstellung des Membranventils (1) der Leitungsdurchgangsquerschnitt im Bereich des Ventilkörpers (2) mediumsseitig wenigstens teilweise von der Membrane (7) im wesentlichen ohne Durchtrittsquerschnittsverengung frei durchgängig ist und in Schließstellung des Membranventils (1) der Durchtrittsquerschnitt im Zusammenwirken von Membrane (7) und Drückstück (12) mit der Innenwand des Ventilkörpers (2) als Ventilsitz abgesperrt ist, **dadurch gekennzeichnet, dass** der Ventilkörper (2) eine Membranauflage (6) aufweist, welche in Längsachsrichtung (3) des Leitungsdurchganges sattelähnlich ausgebildet ist, und ein den Leitungsdurchgangsquerschnitt vervollständigendes Gehäuseteil (8) vorgesehen ist, das die auf der Membranauflage (6) aufliegende Membrane (7) auf der mediumsabgewandten Seite umschließt, dass die Membrane (7) eine sattelähnliche Ausgestaltungsform hat und dass in der Offenstellung des Membranventils (1) ein Teil des Leitungsdurchgangsquerschnitts von der einen Seite der Membrane (7) selbst begrenzt wird und an die Form des Durchgangsquerschnitts in diesem Bereich zur Vervollständigung angepasst ist, und in dieser Offenstellung unterstützend und stabil in dieser gewölbten Gestalt durch das entsprechend ausgestaltete Gehäuseteil (8) des Membranventils (1) gehalten wird.

2. Membranventil nach Anspruch 1, **dadurch gekennzeichnet, dass** die Membrane (7) zwischen der Membranauflage (6) des Ventilkörpers (2) und dem Gehäuseteil (8) eingespannt ist.

3. Membranventil nach einem der vorhergehenden Ansprüche, **dadurch gekennzeichnet, dass** die Membrane (7) angepasst an die Membranauflage (6) und das Gehäuseteil (8) ausgebildet ist und den freien Leitungsdurchgangsquerschnitt in ihrer Offenstellung begrenzt.

4. Membranventil nach einem der vorhergehenden Ansprüche, **dadurch gekennzeichnet, dass** das Druckstück (12) am Gehäuseteil (8) verdrehsicher bei seiner Bewegung von der Offenstellung in die Schließstellung des Membranventils (1) und umgekehrt geführt ist.

5. Membranventil nach Anspruch 4, **dadurch gekennzeichnet, dass** das Gehäuseteil (8) zur verdrehsicheren Führung des Druckstücks (12) eine Anordnung aus mindestens zwei senkrecht zu einander verlaufenden Schlitzen (10, 11) aufweist.

6. Membranventil nach Anspruch 5, **dadurch gekennzeichnet, dass** wenigstens einer der Schlitze (10) etwa in Richtung der Längsachsrichtung (3) des Ventilkörpers (2) verläuft.

7. Membranventil nach einem der vorhergehenden Ansprüche, **dadurch gekennzeichnet, dass** das Druckstück (12) derart ausgelegt ist, dass sein mit der Membrane (7) zusammenarbeitender Bereich in der Schließstellung des Membranventils (1) die Membrane (7) gegen die Innenwandung des Leitungsdurchgangs im Bereich des Ventilkörpers (2) anliegend angedrückt ist.

8. Membranventil nach Anspruch 7, **dadurch gekennzeichnet, dass** der mit der Membrane (7) zusammenarbeitende Bereich des Druckstücks (12) an die Form des Leitungsdurchgangsquerschnitts angepasst ist.

9. Membranventil nach Anspruch 8, **dadurch gekennzeichnet, dass** der mit der Membrane (7) zusammenarbeitende Bereich des Druckstücks (12) keilförmig ausgebildet ist und die Membrane flächig beaufschlagt.

10. Membranventil nach einem der Ansprüche 8 oder 9, **dadurch gekennzeichnet, dass** der mit der Membrane (7) zur Definition der Schließstellung zusammenarbeitende Bereich des Druckstücks (12) in Form eines vorspringenden Kreisabschnitts (14) komplementär zu dem Leitungdurchgangsquerschnitt ausgebildet ist.

11. Membranventil nach Anspruch 10, **dadurch gekennzeichnet, dass** der Keilabschnitt (13) und der vorspringende Kreisabschnitt (14) des Druckstücks (12) im Gehäuseteil (8) mittels der Schlitzanordnung (10, 11) geführt sind.

12. Membranventil nach Anspruch 4 oder 5 und nach Anspruch 10 oder 11, **dadurch gekennzeichnet, dass** das Druckstück (12) einschließlich des vorspringenden Kreisabschnitts (14) in Offenstellung des Membranventils (1) bis in den Bereich der Schlitzanordnung (10, 11) einziehbar ist.

13. Membranventil nach einem der vorhergehenden Ansprüche, **dadurch gekennzeichnet, dass** das Druckstück (12) mittels einer Stelleneinrichtung (15) manuell, elektrisch, hydraulisch und/oder pneumatisch beaufschlagbar ist.

## Claims

1. A diaphragm valve (1) for use in a pipe which can be cleaned in case of need with a cleaning body movable through the cross section of the passageway, particularly in the filed of food and pharmaceutical industry or the like, comprising a valve body (2) and a diaphragm (7), which closes with a compressor (12) in the closing position the flow of fluid through the passageway in the region of the valve body (2), and opens the fluid passage in the open position, wherein the diaphragm (7), the compressor (12) and the valve body (2) are designed such that in the open position of the diaphragm valve (1) the cross section of the passageway in the region of the valve body (2) on the side of the fluid is at least partially open by the diaphragm (7) substantially without narrowing of the cross section of the passageway and in the closed position of the diaphragm valve (1) the cross section is closed by coaction of diaphragm (7) and compressor (12) wit the inner wall of the valve body (2) a valve seat, **characterized in that** the valve body (2) has a diaphragm support (6) having a configuration in the shape of a saddle in the direction of the length axis (3) of the passageway and further comprising a housing part (8) for completing the cross section of the passageway and circumscribing the diaphragm (7) resting on the diaphragm support (6) on a fluid-distal side, that the diaphragm (7) having a configuration in the shape of a saddle, and that in the open position of the diaphragm valve (1) a part of the cross section of the passageway is bordered by one side of the diaphragm (7) itself and is adapted to the shape of the passageway in this region for completion, and is held in this open position supporting and stable in this arched configuration by the congruent shaped housing part (8) of the diaphragm valve (1).

2. The diaphragm valve of claim 1, **characterized in that** the diaphragm (7) is clamped between the diaphragm support (6) of the valve body (2) and the housing part (8).

3. The diaphragm valve of one of the preceding claims, **characterized in that** the diaphragm (7) has a configuration which is suited to a configuration of the diaphragm support (6) and the housing part (8) and limits the passageway in the open position of the diaphragm.

4. The diaphragm valve of one of the preceding claims, **characterized in that** the compressor (12) is guided at the housing part (8) and secured against rotation during its movement from the open to the closing position of the diaphragm valve (1) and vice versa.

5. The diaphragm valve of claim 4, **characterized in that** the housing part (8) is formed with an arrangement having at least two slits (10, 11) extending vertical to one another for securing the compressor (12) against rotation.

6. The diaphragm valve of claim 5, **characterized in that** at least one of the slits (10) extends approximately in the direction of the length axis (3) of he valve body (2).

7. The diaphragm valve of one of the preceding claims, **characterized in that** the compressor (12) is constructed such that its zone interacting with the diaphragm (7) urges in the closing position of the diaphragm valve (1) the diaphragm (7) against the inner wall surface of the passageway in the region of the valve body (2).

8. The diaphragm valve of claim 7, **characterized in that** the zone of the compressor (12) interacting with the diaphragm (7) has a configuration conforming to a configuration of the cross section of the passageway.

9. The diaphragm valve of claim 8, **characterized in that** the zone of the compressor (12) interacting with the diaphragm (7) is constructed wedge-shaped for flat contact upon the diaphragm.

10. The diaphragm valve of claim 8 or 9, **characterized in that** the zone of the compressor (12) interacting with the diaphragm (7) for defining the closing position is constructed to have a projecting circular segment (14) to complement the cross section of the passageway.

11. The diaphragm valve of claim 10, **characterized in that** wedge segment (1§) and the projecting circular segment (14) of the compressor (12) are guided by the slit arrangement (10, 11) in the housing part (8)

12. The diaphragm valve of claim 4 or 5 and of claim 10 or 11, **characterized in that** the compressor (12) including the projecting circular segment (14) is retractable into the area of the slit arrangement (10, 11) in the open position of the diaphragm valve (1).

13. The diaphragm valve of one of the preceding claims, **characterized in that** the compressor (12) can be operated manually, electrically, hydraulically, and/or pneumatically with an actuator (15).

## Revendications

1. Vanne à diaphragme (1) pour un conduit qui peut être nettoyé en cas de besoin au moyen d'un élément de nettoyage pouvant être déplacé à travers la section transversale de passage du conduit, en particulier dans le domaine de l'industrie alimentaire et pharmaceutique ou analogues, comportant un corps de vanne (2) et un diaphragme (7) qui, en position fermée, stoppe le passage de fluide à travers le conduit au niveau du corps de vanne (2) au moyen de la plaque d'appui (12) et, en position ouverte, libère le passage de fluide, sachant que le diaphragme (7), la plaque d'appui (12) et le corps de vanne (2) sont placés de telle manière que, dans la position fermée de la vanne à diaphragme (1), le diaphragme (7) puisse passer au moins en partie librement la section transversale de passage du conduit au niveau du corps de vanne (2) sur la face du support, sensiblement sans rétrécissement de la section transversale de passage, et que, dans la position fermée de la vanne à diaphragme (1), la section transversale de passage soit fermée en tant que siège de vanne, lors de la coopération du diaphragme (7) et de la plaque d'appui (12) avec la paroi intérieure du corps de vanne (2), **caractérisée en ce que** le corps de vanne (2) présente un support de diaphragme (6) qui présente, dans le sens de la longueur (3) du passage du conduit, une forme semblable à celle d'une selle, et **en ce qu'**une partie formant logement (8) complétant la section transversale de passage du conduit est prévue, laquelle entoure le diaphragme (7) posé sur le support de diaphragme (6) sur la face opposée du support, le diaphragme (7) présente une forme semblable à celle d'une selle et, dans la position ouverte de la vanne à diaphragme (1), une partie de la section transversale de passage du conduit est limitée par une face du diaphragme (7) lui-même et est adaptée dans cette zone à la forme de la section transversale de passage en vue de la compléter, et est maintenue, dans cette position fermée, en appui et stable dans cette forme en arc par la partie formant logement (8) de la vanne à diaphragme (1) formée en conséquence.

2. Vanne à diaphragme selon la revendication 1, **caractérisée en ce que** le diaphragme (7) est monté entre le support de diaphragme (6) du corps de vanne (2) et la partie formant logement (8).

3. Vanne à diaphragme selon l'une quelconque des revendications précédentes, **caractérisée en ce que** le diaphragme (7) présente une forme adaptée au support de diaphragme (6) et à la partie formant logement (8) et limite, dans sa position ouverte, la section transversale de passage du conduit libre.

4. Vanne à diaphragme selon l'une quelconque des revendications précédentes, **caractérisée en ce que** la plaque d'appui (12) est guidée sans jeu de torsion sur la partie formant logement (8), lors de son déplacement de la position ouverte à la position fermée de la vanne à diaphragme (1) et inversement.

5. Vanne à diaphragme selon la revendication 4, **caractérisée en ce que** la partie formant logement (8) présente un dispositif comportant au moins deux fentes (10, 11) s'étendant verticalement l'une par rapport à l'autre en vue d'un guidage sans jeu de torsion de la plaque d'appui (12).

6. Vanne à diaphragme selon la revendication 5, **caractérisée en ce qu'**au moins une des fentes (10) s'étend, par exemple, en direction du sens de l'axe longitudinal (3) du corps de vanne (2).

7. Vanne à diaphragme selon l'une quelconque des revendications précédentes, **caractérisée en ce que** la plaque d'appui (12) est placée de telle manière que sa zone travaillant en collaboration avec le diaphragme (7) soit pressée, dans la position fermée de la vanne à diaphragme (1), le diaphragme (7) étant placé contre la paroi intérieure du passage du conduit au niveau du corps de vanne (2).

8. Vanne à diaphragme selon la revendication 7, **caractérisée en ce que** la zone de la plaque d'appui (12) travaillant en collaboration avec le diaphragme (7) est adaptée à la forme de la section transversale de passage du conduit.

9. Vanne à diaphragme selon la revendication 8, **caractérisée en ce que** la zone de la plaque d'appui (12) travaillant en collaboration avec le diaphragme (7) présente la forme d'un coin et sollicite le diaphragme à sa surface.

10. Vanne à diaphragme selon l'une quelconque des revendications 8 ou 9, **caractérisée en ce que** la zone de la plaque d'appui (12) travaillant en collaboration avec le diaphragme (7) présente la forme d'un segment de cercle saillant (14) complémentaire à la section transversale de passage du conduit en vue de la définition de la position fermée.

11. Vanne à diaphragme selon la revendication 10, **caractérisée en ce que** le segment cunéiforme (13) et le segment de cercle saillant (14) de la plaque d'appui (12) sont guidés dans la partie formant logement (8) au moyen du dispositif à fentes (10, 11).

12. Vanne à diaphragme selon la revendication 4 ou 5 et la revendication 10 ou 11, **caractérisée en ce que** la plaque d'appui (12) y compris le segment de cercle saillant (14) peut être insérée, dans la position ouverte de la vanne à diaphragme (1), jusqu'au niveau du dispositif à fentes (10, 11).

13. Vanne à diaphragme selon l'une quelconque des revendications précédentes, **caractérisée en ce que** la plaque d'appui (12) peut faire l'objet d'une sollicitation manuelle, électrique, hydraulique et/ou pneumatique au moyen d'un dispositif positionnel (15).
